# EUROPEAN PATENT SPECIFICATION

(11) **EP 4 335 219 B1**
(45) Date of publication and mention of the grant of the patent: **27.08.2025**
(21) Application number: 21731446.7
(22) Date of filing: 07.06.2021
(51) Int. Cl.: H04W 74/00, H04W 72/27

(54) **DEVICES AND METHODS FOR M-AP COORDINATION TRANSMISSION IN A WIRELESS NETWORK**
VORRICHTUNGEN UND VERFAHREN ZUR M-AP-KOORDINATIONSÜBERTRAGUNG IN EINEM DRAHTLOSEN NETZWERK
DISPOSITIFS ET PROCÉDÉS DE TRANSMISSION DE COORDINATION M-AP DANS UN RÉSEAU SANS FIL

(43) Date of publication of application: 13.03.2024
(60) Divisional application: 25187715.5
(73) Proprietor: Huawei Technologies Co., Ltd., Shenzhen, Guangdong 518129 (CN)
(72) Inventor: TSODIK, Genadiy, 80992 Munich (DE); SHILO, Shimon, 80992 Munich (DE); KLEIN, Arik, 80992 Munich (DE); REDLICH, Oded, 80992 Munich (DE); EZRI, Doron, 80992 Munich (DE)
(74) Representative: Isarpatent
(86) International application number: PCT/EP2021/065115
(87) International publication number: WO 2022/258133

(56) References cited:
- WO-A1-2020/218970
- WO-A1-2021/222374
- US-A1- 2020 076 552
- US-A1- 2021 120 548

## Description

### TECHNICAL FIELD

The present disclosure relates to wireless communications. More specifically, the present disclosure relates to devices and methods for Multi-Access Point (M-AP) coordinated transmission in a wireless communication network.

### BACKGROUND

IEEE-802.11-based WLANs have become popular at an unprecedented rate. 802.11be introduces a Multi AP (M-AP) coordinated transmission, where a group of APs may initiate concurrent frame exchange within a limited time period and one or more APs of the group of APs may share one or more transmission opportunities (TXOPs). The group of APs that have decided to cooperate and perform coordinated transmissions is called an M-AP set. One or more parameters of a coordinated transmission may change between TXOPs including the list of participating APs from the M-AP set, the coordination scheme, resource allocation and the like. However, known or proposed procedures require to re-indicate and re-agree on the coordination parameters at each TXOP regardless of a previous TXOP or any other previous information exchange between the APs. In other words, all or most of the coordination parameters have to be indicated by the TXOP holder to other APs at the beginning of each TXOP. As a consequence, even if some of parameters remain constant over long time periods covering several TXOPs, they still need to be indicated every TXOP resulting in a signaling overhead.

WO 2020/218970 A1 describes an access point (AP)that includes circuitry, which, in operation, generates a frame that includes joint transmission (JT) data and a JT identity that uniquely identifies the JT data. The access point further includes a transmitter, which, in operation, transmits the frame to one or more APs that jointly transmit the JT data to a communication apparatus. If the joint transmission is expected to take place for more than one or two frames, set up is a joint transmission session between the Master AP and the participating Slave APs prior to the actual joint transmission. During the joint transmission session negotiation, the Master AP and Slave APs exchange information about the Target STAs involved in the joint transmission. The Master AP and Slave APs also specify the joint transmission parameters that are expected to be used throughout the session, for example the channel to be used, the PPDU format (HT, VHT or HE etc.), pre-coding schemes for MU-MIMO etc. Each joint transmission session is identified by a unique Session ID.

US 2021/120548 A1 describes systems, methods, and devices related to multi-AP resource sharing. A device may participate in a set of coordinated access points (APs) for coordinating a sharing of one or more resources. The device may evaluate whether there is data to be transmitted to at least one associated station device. The device may, based on the evaluation, perform an action associated with acquiring a first transmit opportunity (TXOP) to be shared with one or more candidate APs of the set of coordinated APs.

US 2020/076552 A1 describes that an access point (AP) may transmit, to a second AP and during a first portion of a transmission opportunity (TxOP), a request to participate in a multi-user (MU) transmission. The AP may receive, from the second AP and during the first portion of the TxOP, an indication of intent to participate in the MU transmission during the second portion of the TxOP, the indication of intent including a resource request of the second AP for participation in the MU transmission. The AP may transmit, during an initial period of the second portion of the TxOP, a trigger signal to the second AP indicating a set of one or more resources for the second AP during the MU transmission. The AP may participate, in conjunction with the second AP and during the second portion of the TxOP, in the MU transmission.

### SUMMARY

It is an objective to provide improved devices and methods for Multi-Access Point (M-AP) coordinated transmission in a wireless communication network allowing for a reduced signaling overhead.

The foregoing and other objectives are achieved by the subject matter of the independent claims. Further implementation forms are apparent from the dependent claims, the description and the figures.

According to a first aspect, a wireless AP under the role of Sharing AP is configured to share at least a portion of a TXOP, namely its obtained TXOP, with at least one further wireless AP within an M-AP set for participating in one or more coordinated transmissions for communicating with a plurality of wireless non-AP stations. For participating in the one or more coordinated transmissions the wireless APs of the M-AP set have decided upon a coordination agreement of a plurality of agreeable coordination agreements within the MAP set, which define one or more communication parameters to be used for the one or more coordinated transmissions. The wireless AP comprises a processing circuitry configured to generate an M-AP agreement-based announcement frame. The M-AP agreement-based announcement frame comprises a coordination agreement identifier within the M-AP set, wherein the coordination agreement identifier identifies the coordination agreement. Moreover, the wireless AP comprises a communication interface configured to transmit the M-AP agreement-based announcement frame to the at least one further wireless AP within the M-AP set, wherein the Sharing wireless AP and the further wireless AP within the M-AP set operate under, i.e. according to, the same coordination agreement identified by the coordination agreement identifier within the M-AP set. Thus, advantageously, an improved wireless AP in a wireless communication network is provided allowing to reduce the signalling overhead for M-AP coordinated transmission. This is because, one or more of the coordination agreement parameters to be used for the coordinated transmissions may be agreed in advance and, thus, are not required to be explicitly signalled.

In a further possible implementation form of the first aspect, the M-AP agreement-based announcement frame further comprises an M-AP set identifier for identifying the M-AP set including the coordination agreement identified by the coordination agreement identifier. Advantageously, the M-AP agreement-based announcement frame allows identifying both the coordination agreement as well as the corresponding M-AP set.

In a further possible implementation form of the first aspect, the M-AP agreement-based announcement frame further comprises information about a number of a plurality of further wireless APs which are proposed to participate in the coordinated transmission in the current TXOP and are operating under the same coordination agreement within the M-AP set.

In a further possible implementation form of the first aspect, the M-AP agreement-based announcement frame further comprises an identifier of the at least one further wireless AP operating under the coordination agreement within the M-AP set which is proposed to participate in the coordinated transmission in the current TXOP. Advantageously, this allows each wireless AP receiving the M-AP agreement-based announcement frame to efficiently determine whether the M-AP agreement-based announcement frame is relevant for the respective wireless AP.

In a further possible implementation form of the first aspect, the M-AP agreement-based announcement frame further comprises AP-specific resource allocation information about communication resources allocated to the at least one further wireless AP operating under the coordination agreement within the M-AP set which is to participate in the coordinated transmission in the current TXOP. Advantageously, this allows the Sharing AP to define a resource allocation to the Shared APs for the current TXOP.

In a further possible implementation form of the first aspect, the M-AP agreement-based announcement frame further comprises coordination scheme dependent information about one or more parameters to be included, if required by a specific coordination scheme under the coordination agreement within the M-AP set.

The coordination agreement defines one or more parameters of the one or more coordinated transmissions that follow the coordinated agreement setting, till the agreement is either torn down or becomes invalid. By identifying the coordination agreement using the M-AP agreement-based announcement frame, advantageously, no further messaging is required to define the one or more coordinated transmission parameters which are invariant along the coordinated agreement duration. In other words, one or more of the coordination agreement parameters to be used for the coordinated transmissions may be agreed in advance and, thus, are not required to be explicitly signalled.

In a further possible implementation form of the first aspect, the M-AP agreement-based announcement frame further comprises a response type indicator indicative of a response type to be used by the at least one further solicited wireless AP operating under the coordination agreement within the M-AP set for responding to the M-AP agreement-based announcement frame. Advantageously, this allows to efficiently coordinate the expected response type from the further solicited wireless AP(s) receiving the M-AP agreement-based announcement frame.

In a further possible implementation form of the first aspect, the response type indicator is indicative of a parallel response, a sequential response or no response from the at least one further solicited wireless AP operating under the same coordination agreement within the M-AP set.

In a further possible implementation form of the first aspect, the at least one further responding wireless AP operating under the same coordination agreement within the MAP set comprises a plurality of further wireless APs operating under the same coordination agreement within the M-AP set, wherein the response type indicator is indicative of the parallel response from the plurality of further wireless APs operating under the same coordination agreement within the M-AP set. The communication interface of the wireless AP is further configured to transmit an M-AP trigger frame to the plurality of wireless APs operating under the same coordination agreement within the MAP set for triggering the parallel response from the plurality of further wireless APs operating under the same coordination agreement within the M-AP set. Advantageously, the trigger frame enables a synchronized simultaneous response from the plurality of further wireless APs.

In a further possible implementation form of the first aspect, the M-AP trigger frame comprises the coordination agreement identifier. Advantageously, this allows any further wireless AP that is not included in the coordination agreement identified by the coordinated agreement identifier to stop their reception of the soliciting M-AP trigger frame and avoid any response thereto.

In a further possible implementation form of the first aspect, the M-AP trigger frame further comprises at least one of a M-AP set identifier for identifying the M-AP set, information about the duration of the response to the M-AP agreement-based announcement frame, an identifier of each of the plurality of further wireless APs operating under the same coordination agreement within the M-AP set, resource allocation information about communication resources allocated to each of the plurality of further wireless APs operating under the same coordination agreement within the M-AP set for replying to the M-AP agreement-based announcement frame, and/or information about a modulation and coding scheme to be used by each of the plurality of further wireless APs operating under the same coordination agreement within the M-AP set for replying to the M-AP agreement-based announcement frame. Advantageously, this allows the further wireless APs to obtain the required format of the response frame.

In a further possible implementation form of the first aspect, the at least one further wireless AP operating under the same coordination agreement within the M-AP set comprises a plurality of further wireless APs operating under the same coordination agreement within the M-AP set, wherein the type indicator is indicative of the sequential response from the plurality of further wireless APs operating under the same coordination agreement within the M-AP set, wherein the communication interface is further configured, in response to receiving a first immediate sequential response to the M-AP agreement-based announcement frame from a first wireless AP of the plurality of further wireless APs operating under the same coordination agreement within the M-AP set, to sequentially transmit a poll frame to a further wireless AP of the plurality of further wireless APs operating under the same coordination agreement within the M-AP set, which has not responded yet, for requesting a response to the M-AP agreement-based announcement frame. Advantageously, this allows to efficiently coordinate the expected response type from the further solicited wireless AP(s) receiving the M-AP agreement-based announcement frame.

In a further possible implementation form of the first aspect, the M-AP agreement-based announcement frame comprises an identifier of the first wireless AP of the plurality of further wireless APs operating under the same coordination agreement within the M-AP set which is configured to respond immediately to the M-AP agreement-based announcement frame. Advantageously, this allows to the Sharing AP to determine which of the further wireless APs will respond immediately.

In a further possible implementation form of the first aspect, the poll frame comprises the coordination agreement identifier and a corresponding M-AP set identifier. Advantageously, this allows a respective further wireless AP receiving the poll frame to associate the poll frame with the previously received M-AP agreement-based announcement frame including the response type indicator.

In a further possible implementation form of the first aspect, the response type indicator is indicative of no response from the at least one further solicited wireless AP operating under the same coordination agreement within the M-AP set, wherein the communication interface is configured to start transmitting within its BSS in accordance with the coordination agreement identified by the coordination agreement identifier.

In a further possible implementation form of the first aspect, the communication interface is configured to receive a response frame from the at least one further wireless AP within the M-AP set, wherein the processing circuitry is configured to extract from the response frame at least one of the coordination agreement identifier, the corresponding M-AP set identifier, an identifier of the at least one further wireless AP and an indicator whether the at least one further wireless AP participates in the one or more coordinated transmissions in the current TXOP in accordance with the coordination agreement within the M-AP set. Advantageously, this allows to efficiently ensure a controlled message exchange between the wireless APs of the M-AP set.

According to a second aspect a method of operating a wireless AP under the role of Sharing AP is provided, wherein the wireless AP is configured to share at least a portion of a TXOP, namely its obtained TXOP with at least one further wireless AP within a M-AP set for participating in one or more coordinated transmissions for communicating with a plurality of wireless stations. The method comprises the steps of:
generating a M-AP agreement-based announcement frame, wherein the M-AP agreement-based announcement frame comprises a coordination agreement identifier within the M-AP set, wherein the coordination agreement identifier identifies one coordination agreement of a plurality of agreeable coordination agreements within the MAP set, and the coordination agreement defines one or more coordinated transmission parameters of the one or more coordinated transmissions; and
transmitting the M-AP agreement-based announcement frame to the at least one further wireless AP within the M-AP set, wherein the wireless AP and the further wireless AP within the M-AP set operate under, i.e. according to the same coordination agreement identified by the coordination agreement identifier within the M-AP set.

In a further possible implementation form of the second aspect, the method further comprises the steps of:
receiving a response from each of the further solicited wireless APs within the M-AP set that operate under, i.e. according to the same coordination agreement; and processing the response content for the approval or disapproval of the parameters specified in the solicited M-AP agreement-based announcement frame.

The method according to the second aspect can be performed by the wireless AP according to the first aspect of the present disclosure. Thus, further features of the method according to the second aspect of the present disclosure result directly from the functionality of the wireless AP according to the first aspect of the present disclosure as well as its different implementation forms described above and below.

According to a third aspect a wireless AP (herein also referred to as "Shared AP") configured to participate in one or more coordinated transmissions for communicating with a plurality of wireless stations making use of at least a portion of a TXOP shared by a further wireless AP (i.e. the "Sharing AP") operating under one of a plurality of coordination agreements within a M-AP set. The wireless AP (i.e. the "Shared AP") comprises a communication interface configured to receive an M-AP agreement-based announcement frame from the further wireless AP and a processing circuitry configured to extract a coordination agreement identifier from the M-AP agreement-based announcement frame. The coordination agreement identifier identifies the coordination agreement of the plurality of agreeable coordination agreements within the M-AP set, and the coordination agreement defines one or more coordinated transmission parameters of the one or more coordinated transmissions. The communication interface is further configured to participate in the one or more coordinated transmissions in the current TXOP in accordance with the coordination agreement within the M-AP set.

In a further possible implementation form of the third aspect, the processing circuitry is further configured to extract in addition to the coordination agreement identifier an M-AP set identifier from the M-AP agreement-based announcement frame for identifying the MAP set. As already described above, the coordination agreement identified by the coordination agreement identifier is between the wireless APs that are members of the MAP set identified by the M-AP set identifier.

In a further possible implementation form of the third aspect, the processing circuitry is further configured to extract a response type indicator from the M-AP agreement-based announcement frame, wherein the response type indicator is indicative of a response type to be used by the solicited wireless AP under the same coordination agreement within the M-AP set for possibly responding to the M-AP agreement-based announcement frame.

In a further possible implementation form of the third aspect, the response type indicator is indicative of a parallel response, a sequential response or no response from the solicited wireless AP.

In a further possible implementation form of the third aspect, the response type indicator is indicative of a parallel response, wherein the communication interface is further configured to receive a M-AP trigger frame from the further wireless AP operating under the same coordination agreement within the M-AP set for triggering the parallel response from the solicited wireless AP with other wireless APs operating under the same coordination agreement within the M-AP set.

In a further possible implementation form of the third aspect, the processing circuitry is further configured to extract the coordination agreement identifier and an M-AP set identifier for identifying the M-AP set from the M-AP trigger frame.

In a further possible implementation form of the third aspect, the processing circuitry is further configured to extract from the M-AP trigger frame at least one of: information about the duration of the response to the M-AP agreement-based announcement frame, an identifier of the wireless AP, resource allocation information about communication resources allocated to the wireless AP for responding to the M-AP agreement-based announcement frame, and/or information about a modulation and coding scheme to be used by the wireless AP for responding to the M-AP agreement-based announcement frame.

In a further possible implementation form of the third aspect, the communication interface is configured to transmit a response frame to the further soliciting wireless AP, in response to the M-AP trigger frame.

In a further possible implementation form of the third aspect, the response type indicator is indicative of the sequential response, wherein the processing circuitry is further configured to determine that an immediate response is required from the wireless AP.

In a further possible implementation form of the third aspect, the communication interface is configured to transmit an immediate response frame to the M-AP agreement-based announcement frame solicited by the further soliciting wireless AP.

In a further possible implementation form of the third aspect, the response type indicator is indicative of the sequential response, wherein the communication interface is further configured to receive a poll frame from the further wireless AP operating under the same coordination agreement within the M-AP set for requesting the response to the M-AP agreement-based announcement frame from the wireless AP.

In a further possible implementation form of the third aspect, the response type indicator is indicative of the no response, wherein the processing circuitry is further configured to determine that no immediate response is required from the wireless AP.

In a further possible implementation form of the third aspect, the poll frame comprises the coordination agreement identifier and a corresponding M-AP set identifier.

In a further possible implementation form of the third aspect, the communication interface is configured to transmit a response frame to the further soliciting wireless AP, in response to receiving the poll frame.

In a further possible implementation form of the third aspect, the response type indicator is indicative of no response from the solicited wireless AP, wherein the communication interface of the solicited wireless AP is configured to, based on the M-AP agreement-based announcement frame, in particular information contained in the M-AP agreement-based announcement frame, to start the one or more coordinated transmissions.

In a further possible implementation form of the third aspect, the response frame comprises at least one of the coordination agreement identifier, the corresponding M-AP set identifier, an identifier of the wireless AP, an indicator whether the wireless AP participates in the one or more coordinated transmissions in the current TXOP in accordance with the coordination agreement within the M-AP set and coordination scheme dependent information about one or more parameters to be included, if required by a specific coordination scheme under the coordination agreement within the M-AP set.

According to a fourth aspect a method of operating a wireless AP under the role of "Shared AP" is provided, wherein the wireless AP is configured to participate in one or more coordinated transmissions for communicating with a plurality of wireless stations making use of at least a portion of a TXOP shared by a further wireless AP operating under one of a plurality of coordination agreements within a M-AP set. The method according to the fourth aspect comprises the steps of:
receiving an M-AP agreement-based announcement frame from the further wireless AP;
extracting a coordination agreement identifier from the M-AP agreement-based announcement frame, wherein the coordination agreement identifier identifies the coordination agreement of the plurality of agreeable coordination agreements within the M-AP set, and the coordination agreement defines one or more coordinated transmission parameters of the one or more coordinated transmissions; and
participating in the one or more coordinated transmissions in the current TXOP in accordance with the coordination agreement within the M-AP set.

In a further possible implementation form of the fourth aspect, the method further comprises extracting an M-AP set identifier from the M-AP agreement-based announcement frame, in addition to the coordination agreement identifier.

In a further possible implementation form of the fourth aspect, the method further comprises the steps of:
extracting a response type indicator from the M-AP agreement-based announcement frame; and
transmitting a response to the soliciting further wireless AP based on the response type indicator. As already described above, the response type indicator may indicate that no response is to be transmitted.

The method according to the fourth aspect can be performed by the wireless AP according to the third aspect of the present disclosure. Thus, further features of the method according to the fourth aspect of the present disclosure result directly from the functionality of the wireless AP according to the third aspect of the present disclosure as well as its different implementation forms described above and below.

According to a fifth aspect a computer program product is provided, comprising program code which causes a computer or a processor to perform the method according to the second aspect or the method according to the fourth aspect, when the program code is executed by the computer or the processor.

Details of one or more embodiments are set forth in the accompanying drawings and the description below. Other features, objects, and advantages will be apparent from the description, drawings, and claims.

### BRIEF DESCRIPTION OF THE DRAWINGS

In the following, embodiments of the present disclosure are described in more detail with reference to the attached figures and drawings, in which:
Fig. 1 shows a wireless communication system for M-AP coordinated transmission, including a plurality of wireless APs of an M-AP set according to an embodiment;
Fig. 2 shows an exemplary sequence of coordinated transmissions of a plurality of wireless APs of an M-AP set according to an embodiment;
Fig. 3 shows a schematic diagram illustrating the sharing of communication resources during coordinated transmissions of a plurality of APs of an M-AP set according to an embodiment;
Fig. 4 illustrates the transmission of M-AP agreement-based announcement frames by a sharing wireless AP according to an embodiment during a coordination agreement period;
Fig. 5 illustrates the transmission of an M-AP agreement-based announcement frame by a sharing wireless AP according to an embodiment;
Fig. 6 illustrates the transmission of a M-AP agreement-based announcement frame by a sharing wireless AP according to an embodiment and parallel responses from a plurality of shared wireless APs of the M-AP set;
Fig. 7 illustrates the transmission of a M-AP agreement-based announcement frame by a sharing wireless AP according to an embodiment and sequential responses from a plurality of shared wireless APs of the M-AP set;
Fig. 8 is a flow diagram illustrating a method of operating a sharing wireless AP according to an embodiment; and
Fig. 9 is a flow diagram illustrating a method of operating a shared wireless AP according to an embodiment.

In the following, identical reference signs refer to identical or at least functionally equivalent features.

### DETAILED DESCRIPTION OF THE EMBODIMENTS

In the following description, reference is made to the accompanying figures, which form part of the disclosure, and which show, by way of illustration, specific aspects of embodiments of the present disclosure or specific aspects in which embodiments of the present disclosure may be used. It is understood that embodiments of the present disclosure may be used in other aspects and comprise structural or logical changes not depicted in the figures. The following detailed description, therefore, is not to be taken in a limiting sense, and the scope of the present disclosure is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

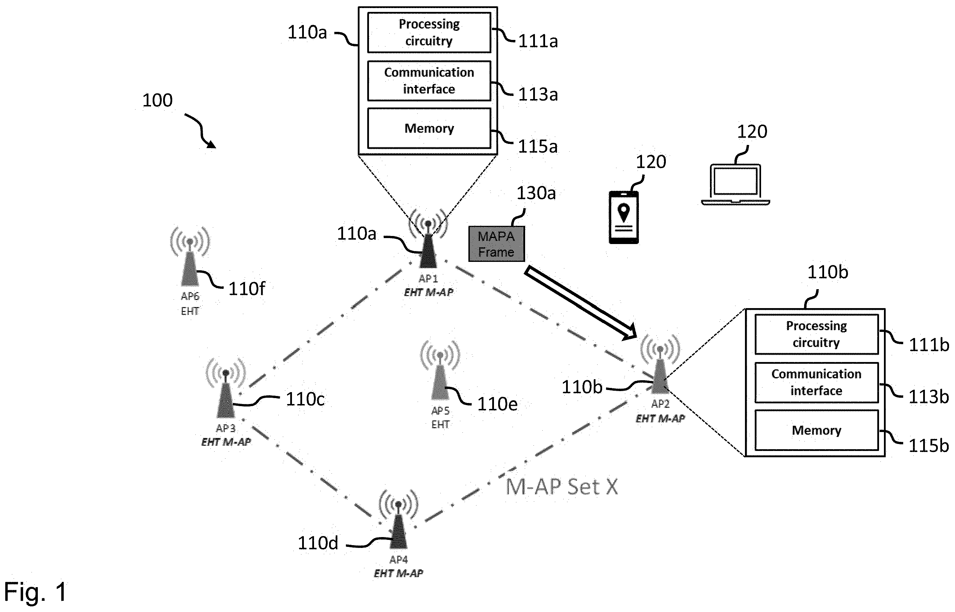

For 802.11be a coordination between multiple wireless APs has been agreed (referred to as Multi-AP or M-AP coordination). A wireless AP which obtains a transmission opportunity (TXOP) and initiates the Multi-AP coordination is called the sharing AP. A wireless AP which is coordinated for the Multi-AP transmission by the sharing AP is called the shared AP. Thus, in a WiFi communication network which supports coordination between APs, the wireless AP obtaining the TXOP, i.e. the TXOP holder may share the resources with other wireless APs within the same M-AP set. This scenario is described in more detail in the following in the context of the exemplary WiFi communication system 100 shown in figure 1. By way of example, the wireless, in particular WiFi communication network 100 shown in figure 1 comprises a plurality of wireless APs 110a-f, wherein the wireless APs 110a-d are part of a M-AP set (referred to as "M-AP Set X" in figure 1), while the wireless APs 110e and 110f are not part of this M-AP set (but may be part of a different M-AP set). For participating in one or more coordinated transmissions the wireless APs 110a-d of the M-AP have set a coordination agreement of a plurality of agreeable coordination agreements within the M-AP set, which define one or more communication parameters to be used for the one or more coordinated transmissions.

In the exemplary scenario illustrated in figure 1, a TXOP may have been obtained, by way of example, by the wireless AP 110a (i.e. the sharing wireless AP 110a), which initiates the coordinated transmission with the further wireless APs of the M-AP set, namely the further wireless APs 110b-d (i.e. the shared wireless APs) for communicating with one or more wireless non-AP stations 120. In other words, the wireless AP 110a under the role of sharing AP is configured to share at least a portion of its obtained TXOP with the sharing wireless APs 110b-d within the M-AP set for participating in one or more coordinated transmissions for communicating with the plurality of wireless non-AP stations 120.

As illustrated in figure 1, the wireless AP 110a (i.e. the sharing AP) according to an embodiment comprises a processing circuitry 111a for processing data and a communication interface 113a for exchanging data with the other wireless APs 110b-f and the one or more wireless non-AP stations 120. In an embodiment, the communication interface 113a may comprise an antenna for wireless communication with the other wireless APs 110b-f and the one or more wireless non-AP stations 120. The processing circuitry 111a may be implemented in hardware and/or software. The hardware may comprise digital circuitry, or both analogue and digital circuitry. Digital circuitry may comprise components such as application-specific integrated circuits (ASICs), field-programmable arrays (FPGAs), digital signal processors (DSPs), or general-purpose processors. The wireless AP 110a may further comprise a memory 115a, e.g. a Flash memory 115a, configured to store executable program code which, when executed by the processing circuitry 111a, causes the sharing wireless AP 110a to perform the functions and operations described herein.

Likewise, the further wireless apparatuses 110b-d (as illustrated in figure 1 for the exemplary further wireless AP 110b) comprise a processing circuitry 111b for processing data, a communication interface 113b for exchanging data with the wireless AP 110a and the one or more wireless non-AP stations 120. In an embodiment, the communication interface 113b may comprise one or more antennas for wireless communication with the one or more wireless non-AP stations 120. The processing circuitry 111b may be implemented in hardware and/or software. The hardware may comprise digital circuitry, or both analogue and digital circuitry. Digital circuitry may comprise components such as application-specific integrated circuits (ASICs), field-programmable arrays (FPGAs), digital signal processors (DSPs), or general-purpose processors. The further wireless APs may further comprise a memory 115b, e.g. a Flash memory 115b, configured to store executable program code which, when executed by the processing circuitry 111b, causes each further wireless AP 110b-d to perform the functions and operations described herein.

As will be appreciated, while in the exemplary coordinated transmission scenario shown in figure 1 the wireless AP 110a is the sharing AP and the further wireless apparatuses 110b-d are the shared APs, in a further coordinated transmission one of the shared APs 110b-d may become the sharing AP and the sharing AP 110a may become one of the shared APs. Thus, the plurality of wireless APs 110a-d may be identical or very similar devices that are configured to provide the functionality of both the shared AP and one of the sharing APs that will be described in more detail in the following.

As will be described in more detail in the following, the processing circuitry 111a of the sharing wireless AP 110a is configured to generate an M-AP agreement-based announcement frame 130a (herein also referred to as "MAPA frame"). The M-AP agreement-based announcement frame 130a comprises a coordination agreement identifier within the M-AP set. The coordination agreement identifier contained within the M-AP agreement-based announcement frame 130a identifies one coordination agreement of a plurality of agreeable coordination agreements within the M-AP set. In an embodiment, the M-AP agreement-based announcement frame 130a may further comprise an M-AP set identifier identifying the M-AP set including the wireless APs 110a-d.

As illustrated in figure 1, the communication interface 113a of the sharing wireless AP 110a is configured to transmit the M-AP agreement-based announcement frame 130a to the shared wireless APs, including the shared wireless AP 110b within the M-AP set. As already described above, the sharing wireless AP 110a and the shared wireless APs have set a coordination agreement that has a unique identifier within the M-AP set, namely the coordination agreement identifier, and may comprise a specific set of invariant parameters. In other words, the sharing wireless AP 110a and the shared wireless AP 110b within the M-AP set operate under, i.e. in compliance with the same coordination agreement identified by the coordination agreement identifier within the M-AP set. Thus, by means of the M-AP agreement-based announcement frame 130a the TXOP holder, i.e. the sharing wireless AP 110a, is able to efficiently inform other APs of the M-AP set, for instance, the wireless AP 110b that may participate in a current coordination transmission regarding proposed coordination parameters (as defined by the coordination agreement). In an embodiment, the communication interface 113a of the sharing wireless AP 110a at the beginning of a TXOP or during a TXOP.

Complementary to the sharing wireless AP 110a, the communication interface 113b of the shared wireless AP 110b is configured to receive the M-AP agreement-based announcement frame 130a from the sharing wireless AP 110a and the processing circuitry 111b is configured to extract, i.e. parse the coordination agreement identifier (and, if present, the M-AP set identifier) from the M-AP agreement-based announcement frame 130a. In accordance with the coordination agreement within the M-AP set identified by the extracted coordination agreement identifier the shared wireless AP 110b, more specifically its communication interface 113b is configured to participate in the one or more coordinated transmissions of the current TXOP.

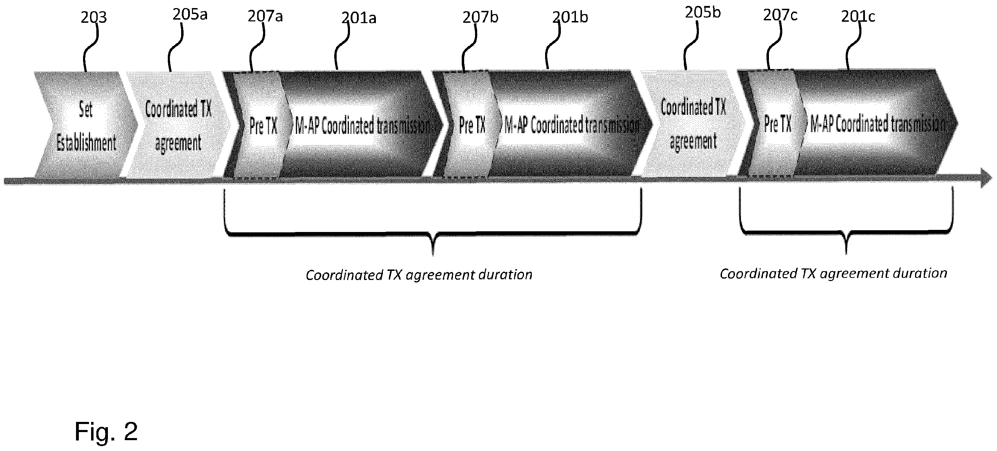

Figure 2 shows an exemplary sequence of coordinated transmissions 201a-c that may be performed by the plurality of wireless APs 110a-d of the M-AP set shown in figure 1. As can be taken from figure 2, once the M-AP set has been established in a stage 203, the wireless APs 110a-d of the M-AP set in a stage 205a may set a specific coordination agreement, which may comprise agreeing on a plurality (not necessarily all) of invariant parameters for the coordinated transmission, i.e. parameter settings to be used by the wireless APs 110a-d of the M-AP set during the coordinated transmissions 201a,b. In an embodiment, some of the coordinated transmission parameters, e.g. parameters depending on the dynamics of the WiFi network 100 may be updated for every TXOP by means of the M-AP agreement-based announcement frame 130a. The M-AP agreement-based announcement frame 130a may be transmitted during a respective pre-"coordinated transmission" stage 207a-c. As illustrated, after one or more coordinated transmission in accordance with a first coordination agreement, the same M-AP set of wireless APs 110a-d or a modified M-AP set of wireless APs (possibly including the wireless APs 110e or 110ffrom figure 1) may set a new coordination agreement. As will be appreciated, while during one coordinated transmission duration the wireless AP 110a may be the sharing AP and the wireless AP 110b one of the shared APs, during the same or another coordinated transmission duration involving a new coordination agreement the wireless AP 110b may be the sharing AP (and perform the operations described in the context of the wireless AP 110a) and the wireless AP 110a one of the shared APs.

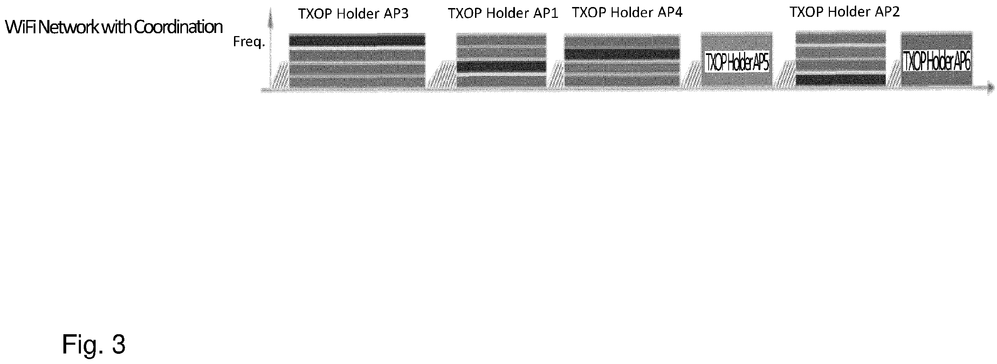

Figure 3 shows a schematic diagram illustrating the sharing of exemplary communication resources during one or more coordinated transmissions of the plurality of APs 110a-d of the M-AP set according to an embodiment. More specifically, several TXOPs are illustrated in figure 3 (as frequency resources over time), wherein a first portion of these TXOPs are obtained by APs that are members of a M-AP set under the same coordination agreement and a second portion of these TXOPs are obtained by those that are not in the M-AP set (such as the wireless APs 110e, 110f of figure 1). When the TXOP holder is an AP which is part of the coordination agreement within the M-AP set, such as the wireless AP 110a of figure 1, it shares its overall frequency resources with several APs for the entire duration of the TXOP and each AP transmits on the frequency portion that is allocated to it. However, when the TXOP holder is not a member of the M-AP set (such as the wireless APs 110e, 110f of figure 1) the entire frequency resources are utilized solely by this TXOP holder without sharing it with other APs. As can be further taken from figure 3, frequency may be shared differently between APs within different TXOPs which illustrates that shared resources may be changed over the coordination agreement duration.

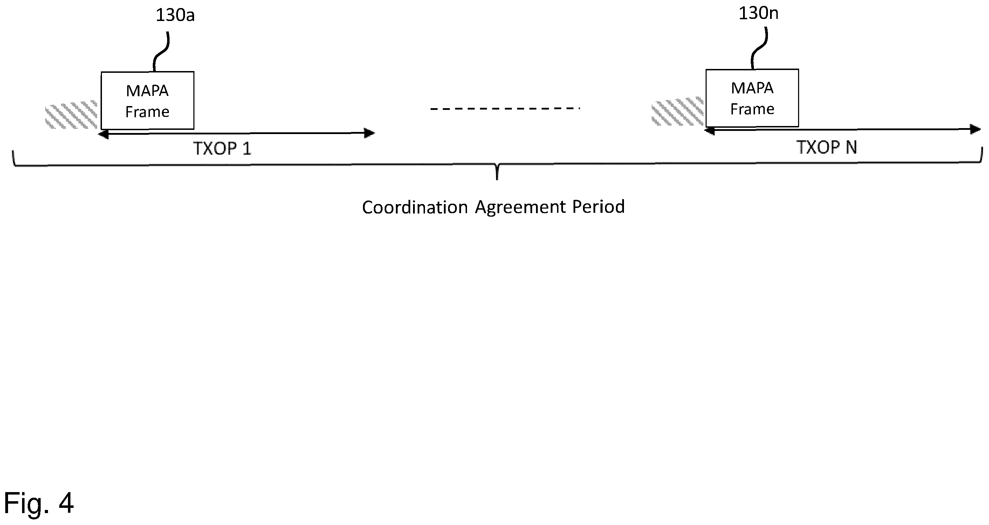

As illustrated in figure 4, a coordination agreement period may include several TXOPs where each TXOP may start with the transmission of the M-AP agreement-based announcement frame 130a and several coordinated transmissions.

In an embodiment, the M-AP agreement-based announcement frame 130a may further comprise information about a number of the plurality of shared wireless APs 110b-d which are proposed to participate in the coordinated transmission 201a-c in each of the TXOPs and are operating under the coordination agreement within the M-AP set. In a further embodiment, the M-AP agreement-based announcement frame 130a may further comprise a respective identifier of the respective shared wireless AP 110b-d operating under the coordination agreement within the M-AP set. In an embodiment, the M-AP agreement-based announcement frame 130a further comprises resource allocation information about communication resources allocated by the Sharing AP to the respective shared wireless AP 110b-d operating under the coordination agreement within the M-AP set for the current TXOP.

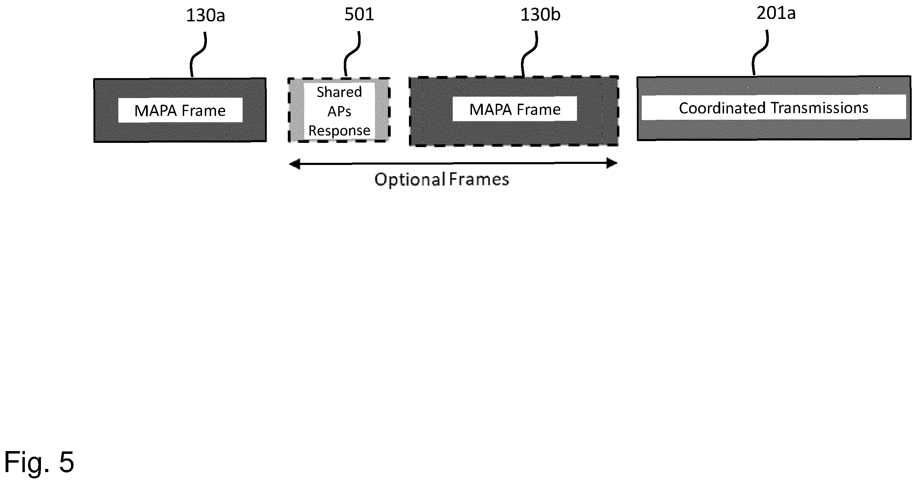

As illustrated in figure 5, in an embodiment, the communication interface 113a of the sharing wireless AP 110a is configured to receive one or more response frames 501 from the shared wireless APs 110b-d under the same coordination agreement within the M-AP set. In an embodiment, the processing circuitry 111a of the sharing wireless AP 110a is configured to extract from the respective response frame 501 at least one of the coordination agreement identifier, the M-AP set identifier, an identifier of the respective shared wireless AP 110b-d and an indicator whether the respective shared wireless AP 110b-d is going to participate in the one or more coordinated transmissions 201a-c in the TXOP in accordance with the coordination agreement within the M-AP set.

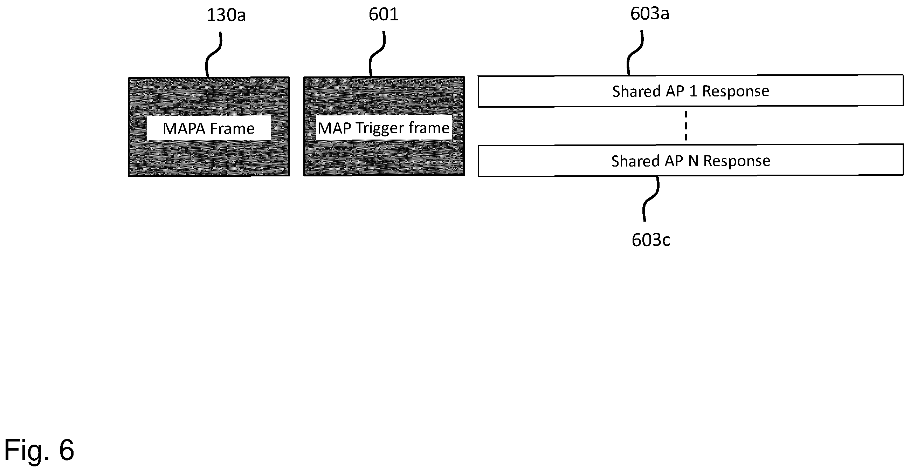

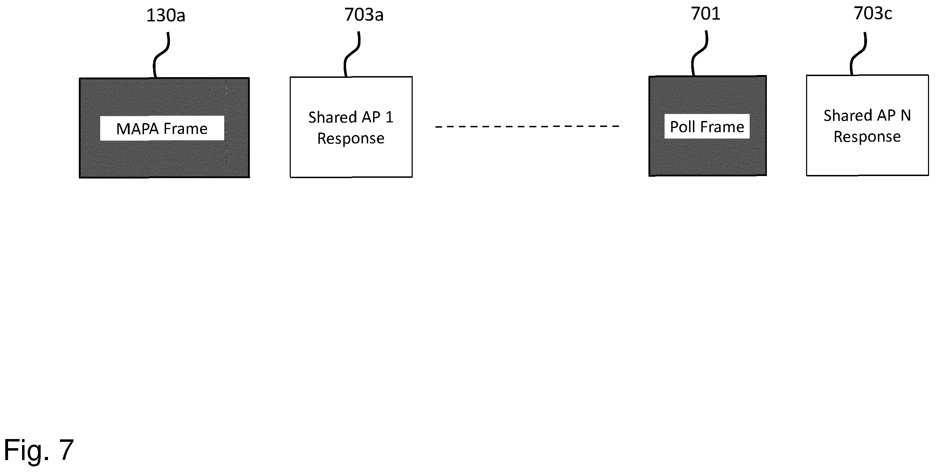

As will be described in more detail in the following under further reference to figures 6 and 7, in an embodiment, the M-AP agreement-based announcement frame 130a further comprises a response type indicator indicative of a response type to be used by each of the shared wireless APs 110b-d for returning the response frame 501 to the sharing wireless AP 110a. In an embodiment, the response type indicator is indicative of a parallel response (illustrated in figure 6), a sequential response (illustrated in figure 7) or no response from the shared wireless APs (as illustrated in figure 5) 110b-d operating under the coordination agreement within the M-AP set.

In the embodiment shown in figure 6, the response type indicator is indicative of a parallel response 603a-n from the shared wireless APs 110b-d operating under the coordination agreement within the M-AP set. As illustrated in figure 6, in an embodiment, the communication interface 113a of the sharing AP 110a may be further configured to transmit an M-AP trigger frame 601 to the shared wireless APs 110b-d for triggering the parallel response 603a-c from the shared wireless APs 110b-d operating under the coordination agreement within the M-AP set. In an embodiment, the M-AP trigger frame 601 may comprise the coordination agreement identifier for allowing the shared wireless APs to associate the M-AP trigger frame 601 with the preceding M-AP agreement-based announcement frame 130a.

In an embodiment, the M-AP trigger frame 601 may further comprise at least one of the M-AP set identifier, information about the duration of the response 603a-c to the M-AP agreement-based announcement frame 130a, an identifier of each of the shared wireless APs 110b-d, resource allocation information about communication resources allocated to each of the shared wireless APs 110b-d for replying to the M-AP agreement-based announcement frame 130a, and/or information about a modulation and coding scheme to be used by each of the shared wireless APs 110b-d for replying to the M-AP agreement-based announcement frame 130a.

As already mentioned above, in the embodiment shown in figure 7, the response type indicator is indicative of a sequential response 703a-cfrom the shared wireless APs 110b-d operating under the coordination agreement within the M-AP set. In this embodiment, the communication interface 113a of the sharing wireless AP 110a is configured, after it has received a first sequential response 701a to the M-AP agreement-based announcement frame 130a from a first shared wireless AP, e.g. the shared wireless AP 110b, to transmit a poll frame 701 to a further shared wireless AP, e.g. the shared wireless AP 110c, which has not responded yet, for requesting a response 703c to the MAP agreement-based announcement frame 130a. In the embodiment illustrated in figure 7, the M-AP agreement-based announcement frame 130a may comprises an identifier of the first shared wireless AP, e.g. the shared wireless AP 110b to respond immediately to the M-AP agreement-based announcement frame 130a. In an embodiment, the poll frame 701 may comprise the coordination agreement identifier and the M-AP set identifier.

Thus, when the response type indicator is indicative of a sequential response, the communication interface 113b of the shared wireless AP 110b, i.e. the first shared wireless AP 110b identified by the M-AP agreement-based announcement frame 130a is configured to immediately (i.e. without awaiting any further triggers) transmit the response frame 703a to the M-AP agreement-based announcement frame 130a solicited by the sharing wireless AP 110a. For the second shared wireless AP identified by the M-AP agreement-based announcement frame 130a, e.g. the shared wireless AP 110c its processing circuitry is configured to determine that for the time being no immediate response is required from the sharing wireless AP 110b (until the poll frame 701 is received).

In an embodiment, where the response type indicator is indicative of no response from the shared wireless APs 110b-d, the communication interface 113a of the sharing wireless AP 110a is configured to immediately start transmitting in accordance with the coordination agreement identified by the coordination agreement identifier (i.e. once the M-AP agreement-based announcement frame 130a has been transmitted). When the response type indicator is indicative of no response, the communication interface 113b of the shared wireless AP 110b may, based on the M-AP agreement-based announcement frame 130a, start the one or more coordinated transmissions 201a-c.

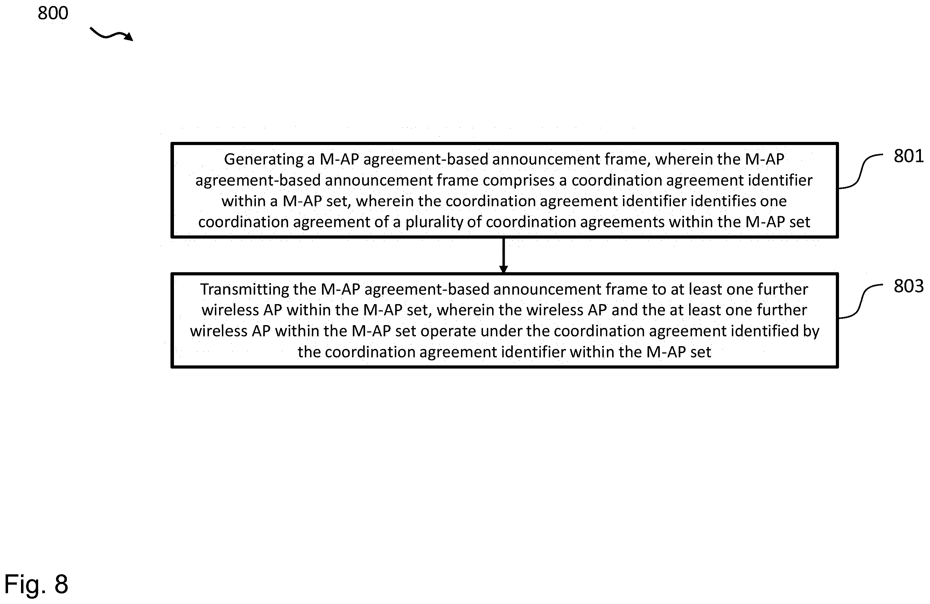

Figure 8 is a flow diagram illustrating a method 800 of operating the sharing wireless AP 110a according to an embodiment. The method 800 comprises the steps of:
generating 801 the M-AP agreement-based announcement frame 130a, wherein the MAP agreement-based announcement frame 130a comprises a coordination agreement identifier within the M-AP set, wherein the coordination agreement identifier identifies one coordination agreement of a plurality of coordination agreements within the M-AP set; and
transmitting 803 the M-AP agreement-based announcement frame 130a to the one or more shared wireless APs 110b-d within the M-AP set, wherein the sharing wireless AP 110a and the one or more shared further wireless APs 110b-d within the M-AP set operate under the coordination agreement identified by the coordination agreement identifier within the M-AP set.

The method 800 may further comprise the steps of receiving a response, such as the parallel or sequential responses 603a-c, 703a-c described above, from each of the shared wireless APs 110b-d within the M-AP set that operate under the same coordination agreement as the sharing wireless AP 110a processing the content of the respective response 603a-c, 703a-c for the approval or disapproval of one or more parameters specified in the M-AP agreement-based announcement frame 130a.

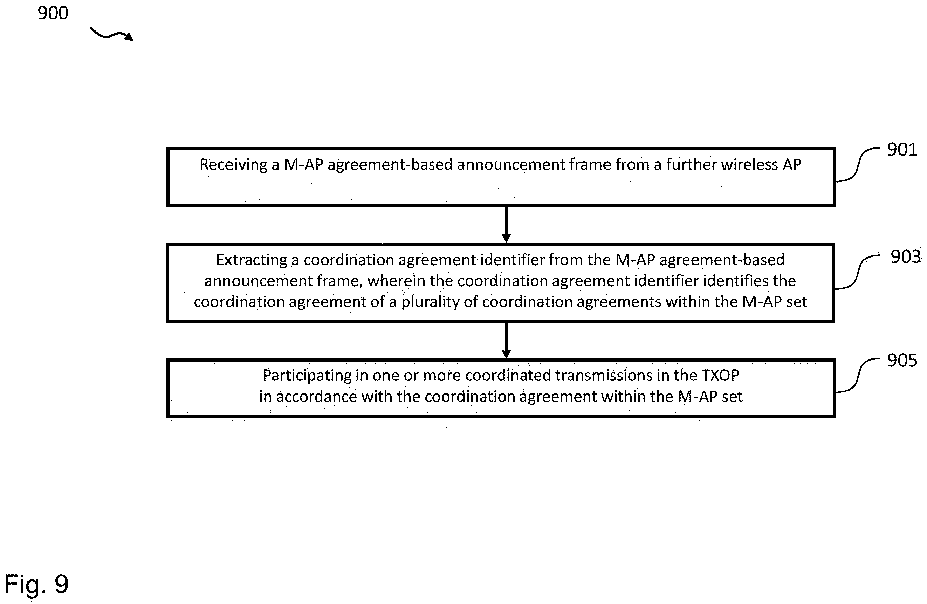

Figure 9 is a flow diagram illustrating a method 900 of operating the shared wireless AP 110b according to an embodiment. The method 900 comprises the steps of:
receiving 901 the M-AP agreement-based announcement frame 130a from the sharing wireless AP 110a;
extracting 903 a coordination agreement identifier from the M-AP agreement-based announcement frame 130a, wherein, as already described above, the coordination agreement identifier identifies the coordination agreement of the plurality of coordination agreements within the M-AP set; and
participating 905 in the one or more coordinated transmissions 201a-c of the TXOP within the M-AP set in accordance with the coordination agreement identified by the coordination agreement identifier.

The method 900 may further comprise extracting a response type indicator from the M-AP agreement-based announcement frame 130a and transmitting a possible response 603a-c, 703a-c to the sharing wireless AP 110a based on the response type indicator. As already described above, in an embodiment, the response type indicator may indicate "no response", in which case there will be no response and the coordinated transmission will immediately begin.

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

## Claims

1. A method (800) of operating a wireless access point, AP, (110a) configured to share at least a portion of a transmission opportunity, TXOP, with at least one further wireless AP (110b-d) within an multi access point, M-AP, set for participating in one or more coordinated transmissions (201a-c), the method (800) comprising:
generating (801) an M-AP agreement-based announcement frame (130a), wherein the M-AP agreement-based announcement frame (130a) comprises a coordination agreement identifier within the M-AP set, wherein the coordination agreement identifier identifies one coordination agreement of a plurality of coordination agreements within the M-AP set, and the coordination agreement defines one or more coordinated transmission parameters of the one or more coordinated transmissions (201a-c); and
transmitting (803) the M-AP agreement-based announcement frame (130a) to the at least one further wireless AP (110b-d) within the M-AP set, wherein the wireless AP (110a) and the at least one further wireless AP (110b-d) within the M-AP set operate under the coordination agreement identified by the coordination agreement identifier within the M-AP set.

2. The method (800) of claim 1, wherein the M-AP agreement-based announcement frame (130a) further comprises an M-AP set identifier.

3. The method (800) of claim 1 or 2, wherein the M-AP agreement-based announcement frame (130a) further comprises information about a number of a plurality of further wireless APs (110b-d) which are proposed to participate in the coordinated transmission (201a-c) in the TXOP and are operating under the coordination agreement within the M-AP set.

4. The method (800) of any one of the preceding claims, wherein the M-AP agreement-based announcement frame (130a) further comprises an identifier of the at least one further wireless AP (110b-d) operating under the coordination agreement within the M-AP set.

5. The method (800) of any one of the preceding claims, wherein the M-AP agreement-based announcement frame (130a) further comprises resource allocation information about communication resources allocated to the at least one further wireless AP (110b-d) operating under the coordination agreement within the M-AP set.

6. The method (800) of any one of the preceding claims, wherein the M-AP agreement-based announcement frame (130a) further comprises coordination scheme dependent information about one or more coordinated transmission parameters to be included, if required by a specific coordination scheme under the coordination agreement within the M-AP set.

7. The method (800) of any one of the preceding claims, wherein the one or more coordinated transmission parameters are invariant along the coordinated agreement duration.

8. A wireless access point, AP, (110a) configured to share at least a portion of a transmission opportunity, TXOP, with at least one further wireless AP (110b-d) within a multi access point, M-AP, set for participating in one or more coordinated transmissions (201a-c), wherein the wireless AP (110a) comprises a processing unit and a memory unit, wherein:
the memory unit is configured to store computer-executable instructions; and
the processing unit is configured to execute the computer-executable instructions, to perform the method (800) according to any one of claims 1 to 7.

9. A method (900) of operating a wireless access point, AP, (110b) configured to participate in one or more coordinated transmissions (201a-c) making use of at least a portion of a transmission opportunity, TXOP, shared by a further wireless AP (110a) operating under one of a plurality of coordination agreements within a multi access point, M-AP, set, the method (900) comprising:
receiving (901) an M-AP agreement-based announcement frame (130a) from the further wireless AP (110a);
extracting (903) a coordination agreement identifier from the M-AP agreement-based announcement frame (130a), wherein the coordination agreement identifier identifies the coordination agreement of the plurality of coordination agreements within the M-AP set, and the coordination agreement defines one or more coordinated transmission parameters of the one or more coordinated transmissions (201a-c); and
participating (905) in the one or more coordinated transmissions (201a-c) in the TXOP in accordance with the coordination agreement within the M-AP set.

10. The method (900) of operating a wireless AP (110b) of claim 9, wherein the method further comprises:
extracting an M-AP set identifier from the M-AP agreement-based announcement frame (130a) for identifying the M-AP set.

11. The method (900) of operating a wireless AP (110b) of claim 9 or 10, further comprising: extracting a response type indicator from the M-AP agreement-based announcement frame (130a), wherein the response type indicator is indicative of a response type to be used by the wireless AP (110b) under the coordination agreement within the M-AP set for responding to the M-AP agreement-based announcement frame (130a).

12. The method (900) of operating a wireless AP (110b) of claim 11, wherein the response type indicator is indicative of a parallel response (603a-c), a sequential response (703a-c) or no response from the wireless AP (110b).

13. The method (900) of operating a wireless AP (110b) of claim 12, wherein the response type indicator is indicative of the parallel response (603a-c) and wherein the communication interface (113b) is further configured to receive an M-AP trigger frame (601) from the further wireless AP (110a) operating under the coordination agreement within the M-AP set for triggering the parallel response (603a-c) from the wireless AP (110b).

14. A wireless access point, AP, (110b) configured to participate in one or more coordinated transmissions (201a-c) making use of at least a portion of a transmission opportunity, TXOP, shared by a further wireless AP (110a) operating under one of a plurality of coordination agreements within a multi access point, M-AP, set, wherein the wireless AP (110b) comprises a processing unit and a memory unit, wherein
the memory unit is configured to store computer-executable instructions; and
the processing unit is configured to execute the computer-executable instructions, to perform the method (900) according to any one of claims 9 to 13.

15. A computer program product comprising a computer-readable storage medium for storing program code which, when executed by a computer or a processor causes the computer or the processor to perform the method according to any one of claims 1 to 7 or 9 to 13.

## Patentansprüche

1. Verfahren (800) zum Betreiben eines drahtlosen Zugangspunkts, AP, (110a), konfiguriert zum Teilen mindestens eines Teils einer Übertragungsmöglichkeit, TXOP, mit mindestens einem weiteren drahtlosen AP (110b-d) in einem Mehrfach-Zugangspunkt- bzw. M-AP-Satz zum Teilnehmen an einer oder mehreren koordinierten Übertragungen (201a-c), das Verfahren (800) umfassend:
Erzeugen (801) eines M-AP-Vereinbarung-basierten Ankündigungsframes (130a), wobei der M-AP-Vereinbarung-basierte Ankündigungsframe (130a) eine Koordinationsvereinbarungskennung in dem M-AP-Satz umfasst, wobei die Koordinationsvereinbarungskennung eine Koordinationsvereinbarung einer Vielzahl von Koordinationsvereinbarungen in dem M-AP-Satz identifiziert und die Koordinationsvereinbarung einen oder mehrere koordinierte Übertragungsparameter der einen oder mehreren koordinierten Übertragungen (201a-c) definiert; und
Übertragen (803) des M-AP-Vereinbarung-basierten Ankündigungsframes (130a) an den mindestens einen weiteren drahtlosen AP (110b-d) in dem M-AP-Satz, wobei der drahtlose AP (110a) und der mindestens eine weitere drahtlose AP (110b-d) in dem M-AP-Satz unter der durch die Koordinationsvereinbarungskennung in dem M-AP-Satz identifizierten Koordinationsvereinbarung betrieben werden.

2. Verfahren (800) nach Anspruch 1, wobei der M-AP-Vereinbarung-basierte Ankündigungsframe (130a) ferner eine M-AP-Satz-Kennung umfasst.

3. Verfahren (800) nach Anspruch 1 oder 2, wobei der M-AP-Vereinbarung-basierte Ankündigungsframe (130a) ferner Informationen über eine Anzahl einer Vielzahl von weiteren drahtlosen APs (110b-d) umfasst, die zur Teilnahme an der koordinierten Übertragung (201a-c) in der TXOP vorgeschlagen werden und unter der Koordinationsvereinbarung in dem M-AP-Satz betrieben werden.

4. Verfahren (800) nach einem der vorhergehenden Ansprüche, wobei der M-AP-Vereinbarung-basierte Ankündigungsframe (130a) ferner eine Kennung des mindestens einen weiteren drahtlosen AP (110b-d), der unter der Koordinationsvereinbarung in dem M-AP-Satz betrieben wird, umfasst.

5. Verfahren (800) nach einem der vorhergehenden Ansprüche, wobei der M-AP-Vereinbarung-basierte Ankündigungsframe (130a) ferner Betriebsmittelzuteilungsinformationen über Kommunikationsbetriebsmittel umfasst, die dem mindestens einen weiteren drahtlosen AP (110b-d), der unter der Koordinationsvereinbarung in dem M-AP-Satz betrieben wird, zugeteilt sind.

6. Verfahren (800) nach einem der vorhergehenden Ansprüche, wobei der M-AP-Vereinbarung-basierte Ankündigungsframe (130a) ferner Koordinationsschemaabhängige Informationen über einen oder mehrere koordinierte Übertragungsparameter umfasst, die einzubeziehen sind, falls durch ein spezifisches Koordinationsschema unter der Koordinationsvereinbarung in dem M-AP-Satz erforderlich.

7. Verfahren (800) nach einem der vorhergehenden Ansprüche, wobei der eine oder die mehreren koordinierten Übertragungsparameter entlang der Dauer der koordinierten Vereinbarung unveränderlich sind.

8. Drahtloser Zugangspunkt, AP, (110a), konfiguriert zum Teilen mindestens eines Teils einer Übertragungsmöglichkeit, TXOP, mit mindestens einem weiteren drahtlosen AP (110b-d) in einem Mehrfach-Zugangspunkt- bzw. M-AP-Satz zum Teilnehmen an einer oder mehreren koordinierten Übertragungen (201a-c), wobei der drahtlose AP (110a) eine Verarbeitungseinheit und eine Speichereinheit umfasst, wobei:
die Speichereinheit konfiguriert ist zum Speichern von computerausführbaren Anweisungen; und
die Verarbeitungseinheit konfiguriert ist zum Ausführen der computerausführbaren Anweisungen, um das Verfahren (800) nach einem der Ansprüche 1 bis 7 durchzuführen.

9. Verfahren (900) zum Betreiben eines drahtlosen Zugangspunkts, AP, (110b), konfiguriert zum Teilnehmen an einer oder mehreren koordinierten Übertragungen (201a-c) unter Verwendung mindestens eines Teils einer Übertragungsmöglichkeit, TXOP, geteilt mit einem weiteren drahtlosen AP (110a), der unter einer einer Vielzahl von Koordinationsvereinbarungen in einem Mehrfach-Zugangspunkt- bzw. M-AP-Satz betrieben wird, das Verfahren (900) umfassend:
Empfangen (901) eines M-AP-Vereinbarung-basierten Ankündigungsframes (130a) von dem weiteren drahtlosen AP (110a);
Extrahieren (903) einer Koordinationsvereinbarungskennung aus dem M-AP-Vereinbarung-basierten Ankündigungsframe (130a), wobei die Koordinationsvereinbarungskennung die Koordinationsvereinbarung der Vielzahl von Koordinationsvereinbarungen in dem M-AP-Satz identifiziert und die Koordinationsvereinbarung einen oder mehrere koordinierte Übertragungsparameter der einen oder mehreren koordinierten Übertragungen (201a-c) definiert; und
Teilnehmen (905) an der einen oder den mehreren koordinierten Übertragungen (201a-c) in der TXOP gemäß der Koordinationsvereinbarung in dem M-AP-Satz.

10. Verfahren (900) zum Betreiben eines drahtlosen AP (110b) nach Anspruch 9, wobei das Verfahren ferner Folgendes umfasst:
Extrahieren einer M-AP-Satz-Kennung aus dem M-AP-Vereinbarung-basierten Ankündigungsframe (130a) zum Identifizieren des M-AP-Satzes.

11. Verfahren (900) zum Betreiben eines drahtlosen AP (110b) nach Anspruch 9 oder 10, ferner umfassend:
Extrahieren eines Antworttyp-Indikators aus dem M-AP-Vereinbarung-basierten Ankündigungsframe (130a), wobei der Antworttyp-Indikator einen Antworttyp angibt, der durch den drahtlosen AP (110b) unter der Koordinationsvereinbarung in dem M-AP-Satz zum Antworten auf den M-AP-Vereinbarung-basierten Ankündigungsframe (130a) zu verwenden ist.

12. Verfahren (900) zum Betreiben eines drahtlosen AP (110b) nach Anspruch 11, wobei der Antworttyp-Indikator eine parallele Antwort (603a-c), eine sequenzielle Antwort (703a-c) oder keine Antwort von dem drahtlosen AP (110b) angibt.

13. Verfahren (900) zum Betreiben eines drahtlosen AP (110b) nach Anspruch 12, wobei der Antworttyp-Indikator die parallele Antwort (603a-c) angibt und wobei die Kommunikationsschnittstelle (113b) ferner konfiguriert ist zum Empfangen eines M-AP-Auslöserframes (601) von dem weiteren drahtlosen AP (110a), der unter der Koordinationsvereinbarung in dem M-AP-Satz betrieben wird, zum Auslösen der parallelen Antwort (603a-c) von dem drahtlosen AP (110b).

14. Drahtloser Zugangspunkt, AP, (110b) konfiguriert zum Teilnehmen an einer oder mehreren koordinierten Übertragungen (201a-c) unter Verwendung mindestens eines Teils einer Übertragungsmöglichkeit, TXOP, geteilt mit einem weiteren drahtlosen AP (110a), der unter einer einer Vielzahl von Koordinationsvereinbarungen in einem Mehrfach-Zugangspunkt- bzw. M-AP-Satz betrieben wird, wobei der drahtlose AP (110b) eine Verarbeitungseinheit und eine Speichereinheit umfasst, wobei
die Speichereinheit konfiguriert ist zum Speichern von computerausführbaren Anweisungen; und
die Verarbeitungseinheit konfiguriert ist zum Ausführen der computerausführbaren Anweisungen, um das Verfahren (900) nach einem der Ansprüche 9 bis 13 durchzuführen.

15. Computerprogrammprodukt, umfassend ein computerlesbares Speichermedium zum Speichern von Programmcode, der, wenn er durch einen Computer oder einen Prozessor ausgeführt wird, den Computer oder den Prozessor veranlasst, das Verfahren nach einem der Ansprüche 1 bis 7 oder 9 bis 13 durchzuführen.

## Revendications

1. Procédé (800) pour faire fonctionner un point d'accès, noté AP, sans fil (110a) configuré pour partager au moins une partie d'une occasion de transmission, notée TXOP, avec au moins un autre AP sans fil (110b-d) au sein d'un ensemble de points d'accès multiples, notés M-AP, pour participer à une ou plusieurs transmissions coordonnées (201a-c), le procédé (800) comprenant :
la génération (801) d'une trame d'annonce basée sur un accord entre M-AP (130a), la trame d'annonce basée sur un accord entre M-AP (130a) comprenant un identifiant d'accord de coordination au sein de l'ensemble de M-AP, l'identifiant d'accord de coordination identifiant un accord de coordination parmi une pluralité d'accords de coordination au sein de l'ensemble de M-AP, et l'accord de coordination définissant un ou plusieurs paramètres de transmission coordonnée des une ou plusieurs transmissions coordonnées (201a-c) ; et
la transmission (803) de la trame d'annonce basée sur un accord entre M-AP (130a) à l'au moins un autre AP sans fil (110b-d) au sein de l'ensemble de M-AP, l'AP sans fil (110a) et l'au moins un autre AP sans fil (110b-d) au sein de l'ensemble de M-AP fonctionnant en vertu de l'accord de coordination identifié par l'identifiant d'accord de coopération au sein de l'ensemble de M-AP.

2. Procédé (800) selon la revendication 1, dans lequel la trame d'annonce basée sur un accord entre M-AP (130a) comprend en outre un identifiant d'ensemble de M-AP.

3. Procédé (800) selon la revendication 1 ou 2, dans lequel la trame d'annonce basée sur un accord entre M-AP (130a) comprend en outre des informations concernant un nombre d'une pluralité d'autres AP sans fil (110b-d) qui sont proposés pour participer à la transmission coordonnée (201a-c) dans la TXOP et fonctionnent en vertu de l'accord de coordination au sein de l'ensemble de M-AP.

4. Procédé (800) selon l'une quelconque des revendications précédentes, dans lequel la trame d'annonce basée sur un accord entre M-AP (130a) comprend en outre un identifiant de l'au moins un autre AP sans fil (110b-d) fonctionnant en vertu de l'accord de coordination au sein de l'ensemble de M-AP.

5. Procédé (800) selon l'une quelconque des revendications précédentes, dans lequel la trame d'annonce basée sur un accord entre M-AP (130a) comprend en outre des informations d'allocation de ressources concernant des ressources de communication allouées à l'au moins un autre AP sans fil (110b-d) fonctionnant en vertu de l'accord de coordination au sein de l'ensemble de M-AP.

6. Procédé (800) selon l'une quelconque des revendications précédentes, dans lequel la trame d'annonce basée sur un accord entre M-AP (130a) comprend en outre des informations, dépendant d'un schéma de coordination, concernant un ou plusieurs paramètres de transmission coordonnée à inclure, si l'exige un schéma de coordination particulier en vertu de l'accord de coordination au sein de l'ensemble de M-AP.

7. Procédé (800) selon l'une quelconque des revendications précédentes, dans lequel les un ou plusieurs paramètres de transmission coordonnée sont invariants sur toute la durée de l'accord coordonné.

8. Point d'accès, noté AP, sans fil (110a) configuré pour partager au moins une partie d'une occasion de transmission, notée TXOP, avec au moins un autre AP sans fil (110b-d) au sein d'un ensemble de points d'accès multiples, notés M-AP, pour participer à une ou plusieurs transmissions coordonnées (201a-c), l'AP sans fil (110a) comprenant une unité de traitement et une unité de mémoire,
l'unité de mémoire étant configurée pour stocker des instructions exécutables par ordinateur ; et
l'unité de traitement étant configurée pour exécuter les instructions exécutables par ordinateur, pour réaliser le procédé (800) selon l'une quelconque des revendications 1 à 7.

9. Procédé (900) pour faire fonctionner un point d'accès, noté AP, sans fil (110b) configuré pour participer à une ou plusieurs transmissions coordonnées (201a-c) en faisant appel à au moins une partie d'une occasion de transmission, notée TXOP, partagée par un autre AP sans fil (110a) fonctionnant en vertu d'un parmi une pluralité d'accords de coordination au sein d'un ensemble de points d'accès multiples, notés M-AP, le procédé (900) comprenant :
la réception (901) d'une trame d'annonce basée sur un accord entre M-AP (130a) en provenance de l'autre AP sans fil (110a) ;
l'extraction (903) d'un identifiant d'accord de coordination à partir de la trame d'annonce basée sur un accord entre M-AP (130a), l'identifiant d'accord de coordination identifiant l'accord de coordination parmi la pluralité d'accords de coordination au sein de l'ensemble de M-AP, et l'accord de coordination définissant un ou plusieurs paramètres de transmission coordonnée des une ou plusieurs transmissions coordonnées (201a-c) ; et
la participation (905) aux une ou plusieurs transmissions coordonnées (201a-c) dans la TXOP conformément à l'accord de coordination au sein de l'ensemble de M-AP.

10. Procédé (900) pour faire fonctionner un AP sans fil (110b) selon la revendication 9, le procédé comprenant en outre :
l'extraction d'un identifiant d'ensemble de M-AP à partir de la trame d'annonce basée sur un accord entre M-AP (130a) pour identifier l'ensemble de M-AP.

11. Procédé (900) pour faire fonctionner un AP sans fil (110b) selon la revendication 9 ou 10, comprenant en outre :
l'extraction d'un indicateur de type de réponse à partir de la trame d'annonce basée sur un accord entre M-AP (130a), l'indicateur de type de réponse indiquant un type de réponse à utiliser par l'AP sans fil (110b) en vertu de l'accord de coordination au sein de l'ensemble de M-AP pour répondre à la trame d'annonce basée sur un accord entre M-AP (130a).

12. Procédé (900) pour faire fonctionner un AP sans fil (110b) selon la revendication 11, dans lequel l'indicateur de type de réponse indique une réponse parallèle (603a-c), une réponse séquentielle (703a-c) ou l'absence de réponse de la part de l'AP sans fil (110b).

13. Procédé (900) pour faire fonctionner un AP sans fil (110b) selon la revendication 12, dans lequel l'indicateur de type de réponse indique la réponse parallèle (603a-c), et dans lequel l'interface de communication (113b) est configurée en outre pour recevoir une trame de déclenchement entre M-AP (601) en provenance de l'autre AP sans fil (110a) fonctionnant en vertu de l'accord de coordination au sein de l'ensemble de M-AP pour déclencher la réponse parallèle (603a-c) de la part de l'AP sans fil (110b).

14. Point d'accès, noté AP, sans fil (110b) configuré pour participer à une ou plusieurs transmissions coordonnées (201a-c) en faisant appel à au moins une partie d'une occasion de transmission, notée TXOP, partagée par un autre AP sans fil (110a) fonctionnant en vertu d'un parmi une pluralité d'accords de coordination au sein d'un ensemble de points d'accès multiples, notés M-AP, l'AP sans fil (110b) comprenant une unité de traitement et une unité de mémoire,
l'unité de mémoire étant configurée pour stocker des instructions exécutables par ordinateur ; et
l'unité de traitement étant configurée pour exécuter les instructions exécutables par ordinateur, pour réaliser le procédé (900) selon l'une quelconque des revendications 9 à 13.

15. Produit-programme d'ordinateur comprenant un support de stockage lisible par ordinateur pour stocker un code de programme qui, lorsqu'il est exécuté par un ordinateur ou un processeur, amène l'ordinateur ou le processeur à réaliser le procédé selon l'une quelconque des revendications 1 à 7 ou 9 à 13.
